# EUROPEAN PATENT APPLICATION

(11) **EP 4 535 902 A1**
(43) Date of publication of application: **09.04.2025**
(21) Application number: 24203144.1
(22) Date of filing: 27.09.2024
(51) Int. Cl.: H04W 72/0453, H04W 84/12, H04W 16/14

(54) **BACKHAUL FREQUENCY CHANNEL DETECTION**

(30) Priority: 06.10.2023 IN 202341067245; 25.01.2024 US 202418422610
(71) Applicant: Cambium Networks Ltd, Ashburton, Devon TQ13 7UP (GB)
(72) Inventor: Khaitan, Rupam, Rolling Meadows, Illinois 60008 (US); Singh, Rohit, 560037 Bangalore (IN); Tadakamadla, Shashank, 560037 Bangalore (IN); Hermans, Daran, Rolling Meadows, Illinois 60008 (US)
(74) Representative: EIP

(57) **Abstract**

A network management device and a method for the network management device is provided. The method for the network management device involves storing an indication of a frequency band used by a wireless backhaul network. One or more corresponding Wi-Fi channels which overlap with the frequency band are identified. A message indicating that the one or more corresponding Wi-Fi channels are not available for use is generated and transmitted to wireless network devices in a local Wi-Fi network. A network device and method for a network device are also provided. The method for the network device involves receiving the message, including the indication of the one or more corresponding Wi-Fi channels, and disabling communication with client devices over the one or more Wi-Fi channels.

## Description

### BACKGROUND OF THE INVENTION

### Field of the Invention

The invention relates to the detection of frequency channels used in wireless backhaul networks. More specifically, but not exclusively, the invention relates to detecting the use of frequency channels in wireless backhaul networks and mitigating potential interference with local Wi-Fi networks.

### Description of the Related Technology

A wireless backhaul network is a type of communication network that is designed to transport data, voice, or other traffic from the edge or access points of a network (such as cell towers, Wi-Fi access points, or remote offices) back to the core or central network infrastructure. The term "backhaul" refers to the process of carrying data from the periphery of the network to its core, enabling the aggregation and routing of traffic to its intended destination.

Wireless backhaul networks rely on radio frequency (RF) links to establish communication between edge devices and the core network. These RF links may operate in various frequency bands, including microwave, millimeter-wave, and other wireless technologies. Wireless backhaul networks are generally designed to handle large volumes of data traffic, including voice calls, video streaming, and internet data. In some cases, they may implement modulation schemes and other advanced technologies to achieve high data rates.

Wireless backhaul networks may be scalable, wherein they can be easily scaled by adding additional links or upgrading existing infrastructure to accommodate increasing data demands. Depending on the frequency band and technology used, wireless backhaul links may require clear line of sight (LOS) between the transmitting and receiving antennas for optimal performance. However, some technologies are capable of operating in non-line-of-sight (NLOS) conditions, which can be beneficial in urban environments with obstacles. Wireless backhaul links may be configured as point-to-point (PTP) links, where two specific points communicate directly, or point-to-multipoint (PMP), where one central point communicates with multiple remote points.

### SUMMARY

According to a first aspect there is provided a method for managing wireless networks, the method comprising: storing an indication of a first frequency band used for communications in a wireless backhaul network; deriving an indication of one or more corresponding Wi-Fi channels based on the stored indication of the first frequency band, the one or more corresponding Wi-Fi channels each being associated with a respective frequency band, wherein the respective frequency bands at least partially overlap with the first frequency band; generating a message including an indication of the one or more corresponding Wi-Fi channels and including an indication that said one or more corresponding Wi-Fi channels are not available for use; and transmitting the message to one or more wireless network devices that are managing a local Wi-Fi network.

According to a second aspect there is provided a wireless network management device comprising one or more processors, one or more communications modules, and storage on which is stored computer-executable instructions which, when executed by the one or more processors cause the wireless network management device to: store an indication of a first frequency band used for communications in a wireless backhaul network; derive an indication of one or more corresponding Wi-Fi channels based on the stored indication of the first frequency band, the one or more corresponding Wi-Fi channels each being associated with a respective frequency band, wherein the respective frequency bands at least partially overlap with the first frequency band; generate a message including an indication of the one or more corresponding Wi-Fi channels and including an indication that said one or more corresponding Wi-Fi channels are not available for use; and transmit the message to one or more wireless network devices that are managing a local Wi-Fi network.

According to a third aspect there is provided a non-transitory computer-readable storage medium comprising computer-executable instructions which, when executed by at least one processor, cause the processor to: store an indication of a first frequency band used for communications in a wireless backhaul network; derive an indication of one or more corresponding Wi-Fi channels based on the stored indication of the first frequency band, the one or more corresponding Wi-Fi channels each being associated with a respective frequency band, wherein the respective frequency bands at least partially overlap with the first frequency band; generate a message including an indication of the one or more corresponding Wi-Fi channels and including an indication that said one or more corresponding Wi-Fi channels are not available for use; and transmit the message to one or more wireless network devices that are managing a local Wi-Fi network.

According to a fourth aspect there is provided a method for a wireless network device used in a local Wi-Fi network, the method comprising: receiving the message including an indication of one or more corresponding Wi-Fi channels and including an indication that said one or more corresponding Wi-Fi channels are not available for use as generated according to the first aspect; and disabling communications between the wireless network device and one or more client devices over the one or more corresponding Wi-Fi channels.

According to a fifth aspect there is provided a wireless network device comprising one or more processor, one or more communications modules, and storage on which is stored computer-executable instructions which, when executed by the one or more processors, cause the wireless network device to: receive the message including an indication of one or more corresponding Wi-Fi channels and including an indication that said one or more corresponding Wi-Fi channels are not available for use as generated according to the first aspect; and disable communications between the wireless network device and one or more client devices over the one or more corresponding Wi-Fi channels.

According to a sixth aspect there is provided a non-transitory computer-readable storage medium comprising computer-executable instructions which, when executed by one or more processor, cause the one or more process to: receive the message including an indication of one or more corresponding Wi-Fi channels and including an indication that said one or more corresponding Wi-Fi channels are not available for use as generated according to the first aspect; and disable communications between the wireless network device and one or more client devices over the one or more corresponding Wi-Fi channels.

### BRIEF DESCRIPTION OF THE DRAWINGS

Figure 1 is a schematic diagram showing a wireless network management device according to examples.
Figure 2 is a schematic diagram showing a network system according to examples.
Figure 3 is a flow chart showing a method for a wireless network management device according to examples.
Figure 4 is a schematic diagram showing a process for determining one or more corresponding Wi-Fi bands according to examples.
Figure 5 is a schematic diagram showing a non-transitory computer-readable storage medium storing instructions for performing the method for the wireless network management device according to examples.
Figure 6 is a schematic diagram showing a wireless network device according to examples.
Figure 7 is a flow diagram showing a method for the wireless network device according to examples.
Figure 8 is a schematic diagram showing a non-transitory computer-readable storage medium storing instructions for performing the method for the wireless network device according to examples.

### DETAILED DESCRIPTION OF CERTAIN INVENTIVE EMBODIMENTS

Wireless backhaul networks may be used in various applications including fixed wireless access (FWA), Wi-Fi networks, satellite communications, and mobile cellular networks. FWA deployments may use wireless backhaul to provide high-speed internet access to homes and businesses in areas without traditional wired infrastructure. In urban areas, wireless backhaul links can be used to connect Wi-Fi access points, or routers, to a central bub, extending network coverage and capacity. In satellite networks, wireless backhaul may be used to connect remote terminals to satellite ground stations. Wireless backhaul networks may also be used to connect cell towers to the core network, allowing users to access voice and data services.

Wireless backhaul networks may use a variety of frequency bands depending on factors such as the network's specific requirements, the available spectrum, and regulatory considerations, which vary by jurisdiction. Some frequencies which are typically used in wireless backhaul networks include:
a. Microwave frequencies in the range of 6 GHz to 42 GHz, which provide high data throughput and relatively long transmission distances, compared to higher frequencies, making them suitable for long-distance links between cell towers or other network nodes.
b. E-Band, around 70 GHz and 80 GHz, these high-frequency bands may be used for high-capacity backhaul links as they provide very high data rates but are limited by shorter transmission distances.
c. Sub-6 GHz bands, including frequencies below 6 GHz, such as 2.4GHz and 5 GHz, may be used for backhaul in Wi-Fi networks and other short-range applications. These frequencies may offer good penetration through obstacles but may have limited capacity compared to higher-frequency bands.

Depending on regulatory approval and spectrum availability, backhaul networks may operate in licensed or unlicensed frequency bands. Licensed bands offer exclusive access but come with regulatory requirements, while unlicensed frequency bands (e.g., 5 GHz in the case of Wi-Fi) are available for use without specific licensing. Unlicensed bands may be subject to interference from other users.

The Industrial, Scientific, and Medical (ISM) band, around 2.4 GHz, is one of the most widely used unlicensed frequency bands. It includes channels used by Wi-Fi networks (e.g., 2.4 GHz Wi-Fi 802.11b/g/n) and Bluetooth devices. This band is globally available for unlicensed use. The 5 GHz band includes unlicensed spectrum for Wi-Fi networks (e.g., 5 GHz Wi-Fi 802.11a/n/ac/ax) and other wireless technologies. It provides additional capacity compared to the 2.4 GHz band and is also used for point-to-point and point-to-multipoint wireless backhaul links.

The choice of frequency bands for a wireless backhaul network may depend on various factors, including the required capacity, distance between network nodes, environmental conditions, and local regulations. Network operators and engineers may select an appropriate frequency band or bands to ensure reliable and efficient backhaul connectivity for their specific deployment needs. In some cases, the frequency bands used in wireless backhaul networks may be changed over time.

Where a wireless backhaul network is configured to use frequency bands in the ranges around 2.4 GHz, 5 GHz, and 6 GHz, it has been found that these wireless backhaul networks may cause interference with local Wi-Fi networks, which typically operate in channels associated with these frequencies.

Certain examples described herein provide devices, methods, and system that operate to mitigate interference in local Wi-Fi networks, such as those deployed in homes, offices, and schools, from wireless backhaul networks. In some examples, a frequency band that is currently being used by a wireless backhaul frequency may overlap with a frequency band used by a local Wi-Fi network that is geographically close to the infrastructure of the wireless backhaul network. In these circumstances there may be interference between the wireless backhaul network and the local Wi-Fi network. According to examples described herein, one or more Wi-Fi channels that are likely to interfere with a wireless backhaul network frequency are identified. Wireless network devices operating in the local Wi-Fi network are instructed not to use the one or more Wi-Fi channels to mitigate interference. The messages sent to the network devices operating in the local Wi-Fi network may be updated according to changes in the frequencies used by the wireless backhaul network. As such, it becomes possible to automatically update the configuration of the local Wi-Fi network to mitigate interference with wireless backhaul networks. This in turn, may alleviate compute and bandwidth strains typically needed to handle interference in wireless networks.

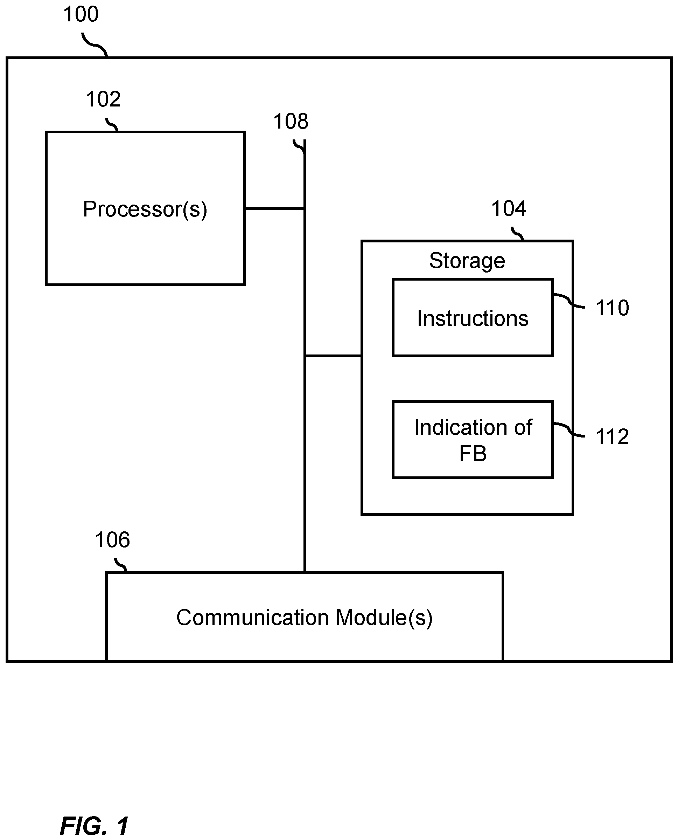

Figure 1 shows an example of a wireless network management device 100 for facilitating and managing communications in a local Wi-Fi network. The wireless network management device 100 comprises one or more processor(s) 102, storage 104, and one or more communications modules 106. The processor(s) 102, storage 104, and communication module(s) 106 are connected over a communication channel, such as a bus 108, allowing them to communicate with each other. The wireless network management device 100 may also be referred to as a network management device 100.

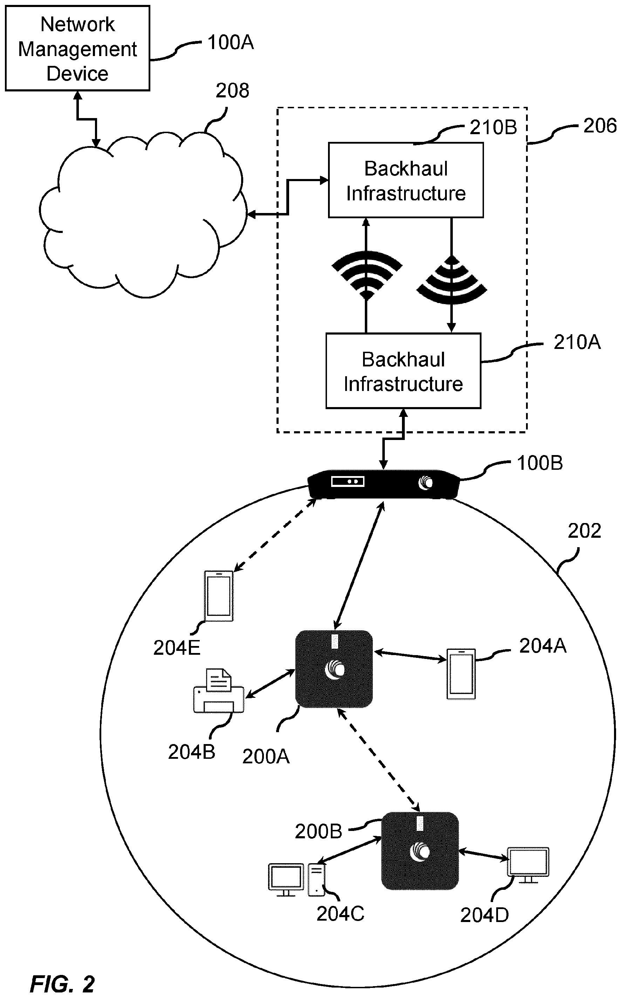

The storage 104 is suitable for storing a set of computer-executable instructions 110 for executing a method 300, which will be described further below with respect to Figures 2 to 6. The storage 104 may also be suitable for storing other types of data such as databases indications of network characteristics, and other data as may be used in implementing the method 300 described herein. The storage 104 may include any combination of volatile and non-volatile storage, for example, a combination of read-only memory (ROM) and one or more types of random-access memory (RAM), such as dynamic RAM, synchronous RAM, and so forth. ROM may be included in the form of both disc-based (e.g. hard drive) or flash memory (e.g. solid-state drive(s)).

The processor(s) 102 may include any suitable combination of processing circuitry configured to execute the instructions 110. The processor(s) 102 may include one or more general purpose processors, such as central processing units (CPU), and/or application specific processing circuitry or processing units. The network management device 100 additionally includes one or more communications modules 106 configured to enable communication with one or more further computing devices, for example, as part of a network. The communications module(s) 106 may comprise wireless communications modules to enable wireless LAN connectivity. The communications module(s) 106 may additionally include wired communications modules to enable wired LAN. These communications modules 106 may implement known protocols and standards such as Wi-Fi, Bluetooth, Ethernet, and so forth. The network management device 100 may be capable of communicating over both local and wide area networks via the communications module(s) 106.

Turning to Figure 2 a network environment 202 is shown. Two examples of a wireless network management device 100 are shown in accordance with the network environment 202. The wireless network management device 100 may be a cloud based network management device 100A configured to communicate with one or more local Wi-Fi networks, such as the network environment 202, over a wide area network 208 such as the internet. In this case, a wireless network management device 100B may be referred to as a wireless network device, and may not be responsible for performing the method 300.

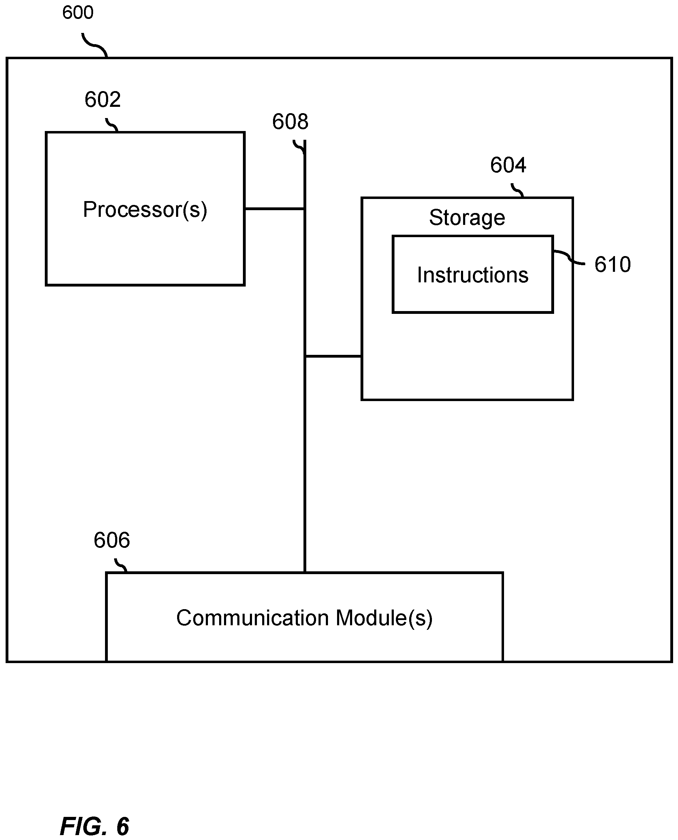

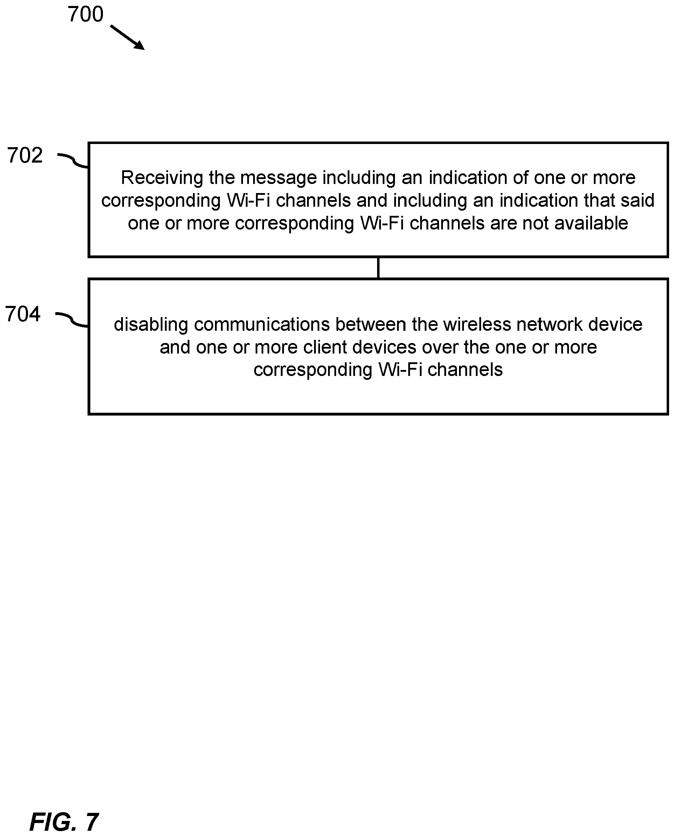

In other examples, the wireless network management device 100 maybe implemented as a network edge device 100B configured to facilitate communication between client devices 204A to 204E connected to the network 202 with one or more external networks 208, such as the internet. The network 202 may also include one or more network devices 200A and 200B, which are access points, configured to facilitate connection between the client devices 204A to 204E and the wireless network management device 100 when connected to the one or more external networks 208. Examples of access points, and their respective functionality, will be described further below with respect to Figures 6 and 7.

Where the wireless network management device 100 is a network edge device 100B, it may facilitate communication between client devices 204A to 204E connected in the network 202 with one or more external networks 208, such as the internet, over a wireless backhaul network 206. In the example shown, the network 202 is a wireless local area network (WLAN) such as that which may deployed in an office, school, or home environment, to enable network computing functions such as file transfer, printing, and so forth between client devices 204A to 204E. The client devices 204A to 204E may also be referred to as user devices, computing devices, or simply devices, it will be appreciated that these devices may not be associated with specific users. A distinction is drawn between the network devices, including the wireless network management device 100B, and the wireless network devices 200A and 200B, which operate to enable communication in the network 202, and the client devices 204A to 204D, which use the network capabilities to communicate amongst each other and/or with an external network 208.

In the example shown in Figure 2, a plurality of device types is shown including printers 204B, smartphones 204A and 204E, desktop computers 204C, smart televisions 204D. The devices shown in Figure 2 and connected in the network 202 are provided as examples only and it is to be appreciated that a variety of communications enabled computing devices, not shown, may also be connected to the network 202, such as servers, remote storage, laptop computers, tablet computers, and so forth.

The network management device 100B may implement a number of network functions for managing devices 204A to 204E and communication with the external networks 208, including authentication, bandwidth distribution, message forwarding, switching, port forwarding, network address translation, and so forth.

The wireless backhaul network 206 may include a plurality of backhaul network infrastructure devices 210A and 210B that are configured to communicate over wireless communications protocols. For example, a first device 210A, also referred to as a subscriber module, may be in communication with the network management device 100B. The first device 210A may communicate wirelessly with a second device 210B which is capable of communicating with a core network, or networks, such as the internet 208.

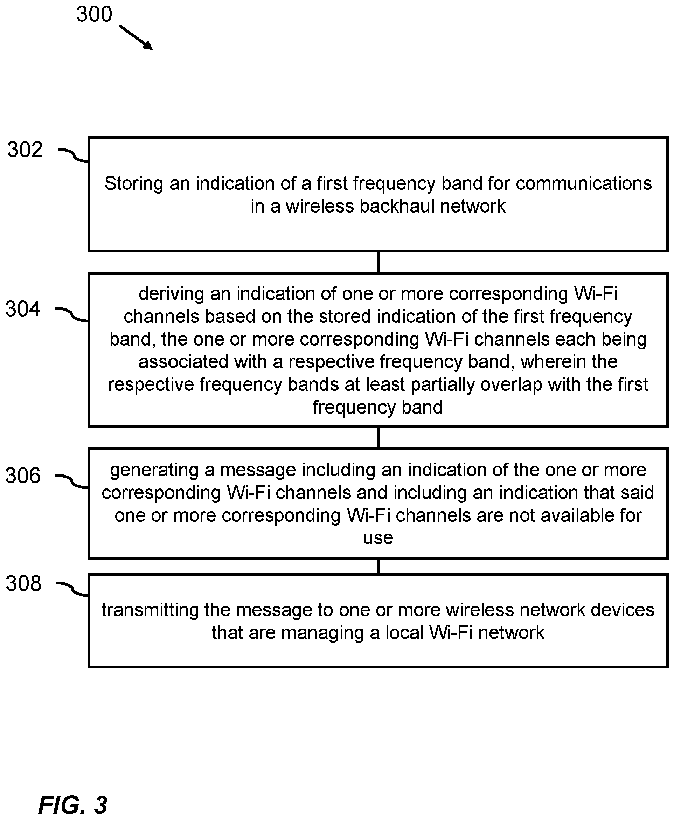

As briefly mentioned above, the storage 104 includes instructions 110 for performing a method 300 in the network management device 100, shown in the flow chart of Figure 3. The method 300 will now be described with reference to Figures 2 to 4. The method involves storing 302 an indication of a first frequency band used for communications in a wireless backhaul network. The first frequency band may be frequency band that is currently being used by the wireless backhaul network, for example, as used to communicate between the backhaul infrastructure devices 210A and 210B. As discussed briefly above, the frequency bands used in a wireless backhaul network may be configured, and/or changed, based on current operating requirements in the wireless backhaul network. In this case, the first frequency band may be a most recent frequency band used in the wireless backhaul network.

The first frequency band may include a plurality of specific frequencies at a precision configured in the backhaul infrastructure 210A and 210B. The indication of the first frequency band may be provided to the network management device 100 by the backhaul infrastructure devices 210A or 201B. Alternatively, the indication of the first frequency band may be provided by a network administrator via an interface to the network management device 100, and/or using the one or more communication module(s) 106.

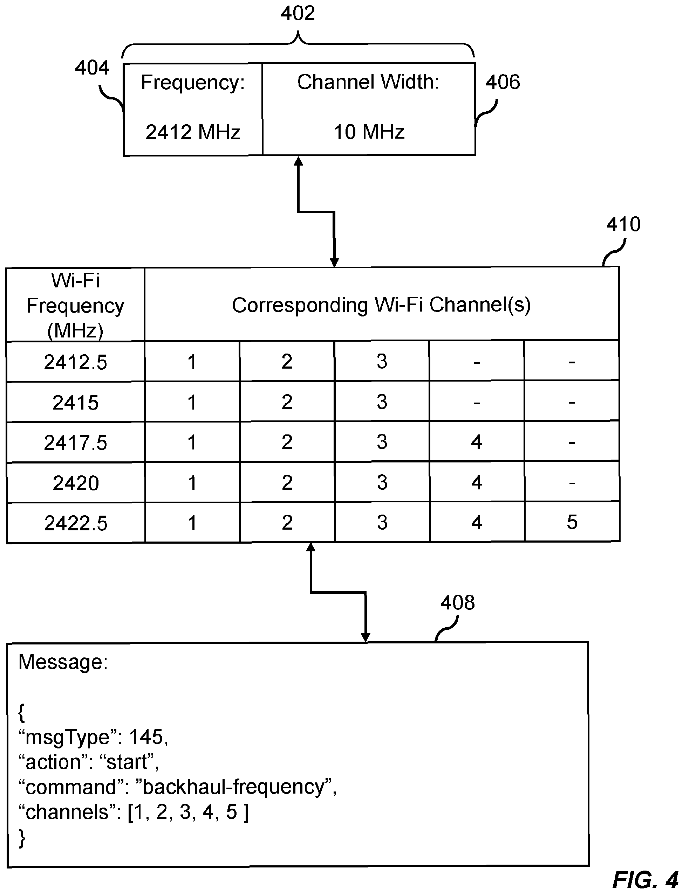

Turning briefly to Figure 4, an example of an indication 402 of the first frequency band is shown. In this example, the indication of the first frequency band includes an indication of a base frequency 404 and a channel width 406. These two values together may be used to specify the first frequency band, wherein the base frequency 404 is a baseline frequency, or lower threshold, in the first frequency band, and the channel width determines the upper thresholds of the first frequency band. The upper threshold of the first frequency band may be determined by, for example, modifying the base frequency 404 by the channel width 406, wherein modifying may include adding the base frequency 404 and the channel width 406. In other examples, the first frequency band may be defined by modifying the base frequency 404 by adding and subtracting the channel width 406. Wherein a lower threshold for the first frequency band is determined by subtracting the channel width 406 from the base frequency 404, and the upper threshold for the first frequency band is determined by adding the channel width 406 to the first frequency 404. In some examples, the threshold frequencies defining the first frequency band may be defined with a precision to account for a precision of the radio transmissions equipment used in the networks 202. For example, where the base frequency 404 is 2412 MHz and the channel width 406 is 10 MHz, the threshold frequencies defining the first frequency band may be 2411.5 MHz and 2422.5 MHz, where a precision of ±0.5 MHz is used.

In the example shown, the base frequency 404 and channel width 406 is shown in MHz. It will be appreciated that the base frequency 404 and channel width 406 may be expressed in units according to the precision of the base frequency 404 and channel width 406 with which the network management device 100 and/or the wireless backhaul infrastructure are capable of implementing, for example KHz, or GHz.

The method 300 involves deriving 304 an indication of one or more corresponding Wi-Fi channels based on the stored indication 402 of the first frequency band. In local Wi-Fi networks, the available frequency ranges that may be used are generally sub-divided into specific frequency ranges, called Wi-Fi channels. These channels allow multiple Wi-Fi devices to communicate wirelessly without interfering with each other. Interference may be mitigated by using different channels or channels that do not overlap. The allocation of Wi-Fi channels may vary depending on regional regulations and not all channels are available for use in every country. Channels may be time-shared by multiple networks, in which procedures such as time-division multiple access are implemented to enable channel sharing.

As an example, the 2.4 GHz band is divided into multiple channels, typically numbered from 1 to 11 in many regions. In the United States there a total of 14 bands, but generally only 11 of those are legally available. However, not all of these channels are non-overlapping. Channels 1, 6, and 11 are commonly used in Wi-Fi networks as they do not overlap with each other, allowing three separate networks to operate in close proximity without causing interference. Channels 2 through 5 and channels 7 through 10 partially overlap with each other and may be avoided where possible when configuring Wi-Fi networks to mitigate interference.

As described above, the Wi-Fi channels are each associated with a respective frequency band. The frequency bands of any two Wi-Fi channels may be overlapping with one another, depending on the specific implementation. The one or more Wi-Fi channels which correspond to the first frequency band include Wi-Fi channels for which the respective frequency band of the given Wi-Fi channel at least partially overlaps with the first frequency band.

For example, where the first frequency band is between 2412 MHz and 2422 MHz, the one or more corresponding Wi-Fi channels may include any Wi-Fi channels having a respective frequency band that at least partially overlaps with the frequency band 2412 Mhz to 2422 MHz. In this specific example, this would include 2.4 GHz channels 1, 2, 3, 4, and 5 which are associated with respective frequency bands shown in table 1 below:

**Table 1- 2.4 GHz Wi-Fi channels and associated frequency bands**

| **2.4 GHz Channel** | **Frequency Range (MHz)** |
|---|---|
| 1 | 2401 - 2423 |
| 2 | 2406 - 2428 |
| 3 | 2411 - 2433 |
| 4 | 2416 - 2438 |
| 5 | 2421 - 2443 |

The 5 GHz band offers more available channels and wider non-overlapping channel options compared to the 2.4 GHz band. The specific channel allocation can vary depending on regional regulations, but in general, there are more channels available in the 5 GHz band. There are generally 25 channels available in the 5 GHz band, and each of the 25 available channels are non-overlapping, having a channel width of 20 MHz. More recently, a 6 GHz band has been introduced in 802.11ax and also provides wider non-overlapping channel options than the 2.4 GHz band.

In examples where the indication of the first frequency band 402 includes a base frequency 404 and a channel width 406, deriving the indication of the one or more corresponding Wi-Fi channels may involve identifying a first set of one or more Wi-Fi channels, corresponding to the base frequency 404. One or more further sets of Wi-Fi channels are determined that correspond to frequencies starting from the base frequency up to and including a frequency that is equal to the base frequency 404 plus the channel width. This is shown in Figure 4 in the table 410. As can be seen a first used frequency 2412.5 MHz that corresponds to the base frequency 404 is determined. It is determined that this frequency overlaps with three 2.4 GHz Wi-Fi channels, 1, 2, and 3. This first used frequency is then incremented by a predetermined amount up to and including an amount indicated by the channel width 406. For each increment, the corresponding Wi-Fi channels are determined. The increment in this case may be defined by the configuration of the wireless backhaul network 206.

Once an indication of the one or more corresponding Wi-Fi channels is determined, the method 300 involves generating 306 a message 408 including an indication of the one or more corresponding Wi-Fi channels and including an indication that said one or more corresponding Wi-Fi channels are not available for use. Turning again to Figure 4, an example of a message 408 is shown. The message 408 includes an indication of the message type, an action to be taken, a command to be implemented in response to the message, and an indication of the one or more corresponding Wi-Fi channels which in this case includes channels 1, 2, 3, 4, and 5. The command, in this example, specifies "backhaul-frequency" which indicates that the following channels are being used, which is to say they are occupied, by a wireless backhaul network 206 and hence are not available for use in the local Wi-Fi network 202.

The message 408 is transmitted 308 to one or more wireless network devices 100B, 200A and 200B that are managing local Wi-Fi networks. Returning to Figure 2, where the wireless network management device 100A is the external, or cloud based, network management device, the message 408 will be sent to devices in the network 202, including network edge devices, or wireless routers, as well as access points 200A and 200B. The message 408 may be sent via the backhaul network 206.

The wireless network network management device 100A may send the message 408 to all devices 100B, 200A, and 200B in the network 202. Alternatively, the wireless network management device 100A may send the message 408 to a wireless router, or edge device, 100B, which then forwards the message to other devices 200A and 200B in the network 202. It will be appreciated, that in some implementations, not shown, such as in private homes the network 202 may not include additional dedicated access points 200A and 200B and all client devices 204A to 204E may connect directly to the edge device 100B, or wireless router.

In examples in which the wireless network management device 100 is a local edge device 100B, the wireless network management device 100B may transmit the message 408 to the two wireless network devices 200A and 200B which in this case are acting as access points.

By receiving an indication of one or more corresponding Wi-Fi channels which are not available for use, due to being used by the wireless backhaul network 206, it becomes possible to reduce potential interference between the local Wi-Fi network 202 and the wireless backhaul network 206 by ensuring that these networks 202 use channels that exclude the frequency bands used by the wireless backhaul network 206.

The wireless network devices 200A and 200B, when acting as access points, may be capable of performing load balancing in the network 202 by performing channel switching. Based on the message 408, channel switching may be performed to avoid the one or more corresponding Wi-Fi channels.

In some examples, deriving the indication of one or more corresponding Wi-Fi channels includes accessing a database that is storing a plurality of records which associated Wi-Fi channels to frequencies. The database, not shown, may for example include a record for each Wi-Fi channel that is generally available for use in the local Wi-Fi network 202. The records may each include an indication of a range of frequencies used in association with the respective Wi-Fi channel. The database may be stored in the wireless network management device 100 and/or may be stored in an external computing device which is accessible by the wireless network management device 100 using the one or more communications modules 106.

The message 408 may include an indication of a time period for which the one or more corresponding Wi-Fi channels are not available for use. As described above, frequency bands used in the wireless backhaul network 206 may change over time due to network configuration, environmental conditions, and administrator choice. In some cases, the frequency bands used in the wireless backhaul network 206 may be selected for use for a predetermined period of time, for example, to handle temporary of periodic changes in network conditions. These temporary or periodic changes may include daily usage patterns, seasonal changes, weather conditions, and so forth. In this case, the frequency bands used by the wireless backhaul network 206 may overlap with the Wi-Fi channels used in the local Wi-Fi network 202 for a limited time period. As such, the message 208 may include an indication of a time period for which the one or more corresponding Wi-Fi channels are not available for use, such that once the predetermined period has elapsed, the network devices 200A and 200B may resume use of the one or more corresponding Wi-Fi channels. In this way, any affect to performance of the local Wi-Fi network 202 based on the disabling of certain Wi-Fi channels, may be limited to specific periods of time thereby increasing the average performance of the Wi-Fi channel while also implementing the interference mitigation techniques described above.

Deriving 304 the indication of the one or more Wi-Fi channels may be performed in response to detecting a change in the stored indication 402 of the first frequency band. As described above, the stored indication 402 of the first frequency band may be updated in response to a change in configuration of the wireless backhaul network 206. The network management device 100 may be configured to communicate with one or more infrastructure components 210A and 210B in the backhaul network. The network management device 100 may receive an instruction to update the stored indication 402 of the first frequency band in response to a change in the wireless backhaul network 206. Alternatively, or additionally, an administrator may update the stored indication 402 of the first frequency band. By deriving the one or more corresponding Wi-Fi channels and sending the message 408 to the wireless network devices 100B, 200A and 200B in response to changes in the stored indication 402, it becomes possible to efficiently and responsively update the configuration of the local Wi-Fi network 202 to mitigate interference with the wireless backhaul network 206.

In some examples, not shown, the first frequency band may include one or more non-contiguous frequency bands. Alternatively, the method 300 may also involve storing an indication of a second frequency band used for communications in a wireless backhaul network 206, and the deriving 304 of an indication of one or more corresponding Wi-Fi channels is also performed with respect to the second frequency band. Similarly, the message 308 may include an indication of one or more corresponding Wi-Fi channels that are associated with respective frequency bands that at least partially overlap with the first frequency band and the second frequency band. In this way, it is possible to simultaneously mitigate interference for a plurality of frequency bands used in the wireless backhaul network 206 or associated with a plurality of respective wireless backhaul networks 206.

In some examples, transmitting the message 408 to one or more wireless network devices may be performed in response to a detection that a wireless network device 100B, 200A, or 200B has been registered. In this way, whenever there are changes in the network 202, the currently disabled Wi-Fi channels are communicated in the network 202 to ensure that they are not used by any network devices 100B, 200A and 200B.

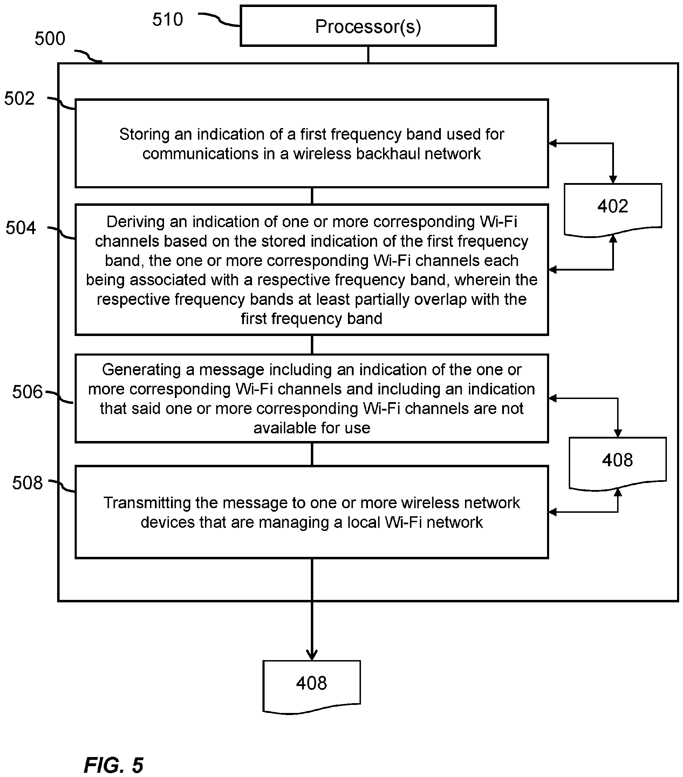

Turning to Figure 5 an example of a non-transitory computer-readable storage medium 500 comprising computer-executable instructions 502 to 508 which, when executed by at least one processor 510, cause the processor 510 to perform a method 300 as described above. A first instruction 502, when executed, causes the processor 510 to store an indication 402 of a first frequency band used for communications in a wireless backhaul network 206. A second instruction 504, when executed, causes the processor 510 to derive an indication of one or more corresponding Wi-Fi channels based on the stored indication of the first frequency band, the one or more corresponding Wi-Fi channels each being associated with a respective frequency band, wherein the respective frequency bands at least partially overlap with the first frequency band.

The third instruction 506, when executed, causes the processor 510 to generate a message 408 including an indication of the one or more corresponding Wi-Fi channels and including an indication that said one or more corresponding Wi-Fi channels are not available for use. The fourth instruction, when executed, causes the processor 510 to transmit the message 408 to one or more wireless network devices 100B, 200A and 200B that are managing a local Wi-Fi network 202.

Figure 6 shows an example of a wireless network device 600. The wireless network device 600 comprises one or more processor(s) 602, storage 604, and one or more communications modules 606. The processor(s) 602, storage 104, and communication module(s) 606 are connected over a communication channel, such as a bus 608, allowing them to communicate with each other. The wireless network device 600 may also be referred to as a network device 600.

The storage 604 is suitable for storing a set of computer-executable instructions 610 for executing a method 700, which will be described further below with respect to Figure 7. The storage 604 may also be suitable for storing other types of data such as databases indications of network characteristics, and other data as may be used in implementing the method 700 described herein. The storage 604 may include any combination of volatile and non-volatile storage, for example, a combination of read-only memory (ROM) and one or more types of random-access memory (RAM), such as dynamic RAM, synchronous RAM, and so forth. ROM may be included in the form of both disc-based (e.g. hard drive) or flash memory (e.g. solid-state drive(s)).

The processor(s) 602 may include any suitable combination of processing circuitry configured to execute the instructions 610. The processor(s) 602 may include one or more general purpose processors, such as central processing units (CPU), and/or application specific processing circuitry or processing units. The network device 200A may additionally include one or more communications modules 606 configured to enable communication with one or more further computing devices, for example, as part of a network. The communications module(s) 606 comprise wireless communications modules to enable wireless LAN connectivity. The communications module(s) 606 may additionally include wired communications modules to enable wired LAN connectivity. These communications modules 606 may implement known protocols and standards such as Wi-Fi, Bluetooth, Ethernet, and so forth. The network device 600 may be capable of communicating over both local and wide area networks via the communications module(s) 106.

In examples in which the wireless network management device 100 is implemented as an external, or cloud-based, wireless network management device 100A the network device 600 may implemented as any of the network edge device 100B, or the access points 200A and 200B. Access points (APs) generally manage the association and disassociation of wireless clients 204A to 204E. When a client device 204A to 204E wants to connect to the network 202, it communicates with the access point to establish a connection. APs may help manage the allocation of radio channels to avoid interference and congestion in crowded Wi-Fi environments. They may automatically select the best channel or allow for manual configuration. Wireless APs provide a number of key functions, including wireless connectivity, emitting radio signals usually on 2.4GHz, 5GHz, or 6GHz frequency bands that enable Wi-Fi devices to connect to a network. APs also facilitate SSID broadcast, in which the APs broadcast an SSID which is the name of the wireless network to which they provide access. APs typically include security features to protect the wireless network. This may include encryption methods (e.g. WPA2/WPA3), MAC address filtering, and the ability to set a password or pre-shared key for network access.

In smaller networks 202, or where the client device 204E is located close to the network edge device 100, the network edge device 100B may connect directly with the client devices 204E. Access points, when compared to network edge devices 100B, generally provide fewer management functionalities than network edge devices, but are responsible for the connections to client devices 204A to 204E.

In examples where the method 300 is implemented in a network management device 100B, that is a wireless network edge device, then the network device 600 configured to perform the method 700 may be implemented as at least one of the access points 200A and 200B.

The method 700 which the network device 600 is configured to perform, based on the instructions 610, involves receiving 702 the message 408 including an indication of one or more corresponding Wi-Fi channels and including an indication that said one or more corresponding Wi-Fi channels are not available for use as generated according to the method 300 for the network management device 100 described above.

The method 700 also comprises disabling 704 communications between the wireless network device 200A and one or more client devices 204A to 204E over the one or more corresponding Wi-Fi channels. For example, in response to the message 408, the network device 600 may reconfigure bandwidth load balancing to exclude the use of Wi-Fi channels indicated in the message 408.

Disabling communication over the one or more Wi-Fi channels may involve ignoring connection requests, and/or other messages, from client devices 204A to 204E attempting to use the disabled Wi-Fi channels. This may cause the client devices 204A to 204E to switch to other, allowed, Wi-Fi channels. Alternatively, or additionally, disabling communication over the one or more Wi-Fi channels may involve transmitting a message to the one or more client devices 204A to 240E indicating that the one or more corresponding Wi-Fi channels are not available for use. This may involve specifying which Wi-Fi channels are explicitly to be used, rather than an indication of which Wi-Fi channels are not to be used. In this way, the client devices 204A to 204E are informed of which Wi-Fi channels are to be used to communicate in the network 202 and hence mitigate wireless interference with the wireless backhaul network 206.

Where the message 408 includes in indication of a time period for which the one or more corresponding Wi-Fi channels are not available for use, the method 700 involves disabling communications between the wireless network device 600 and the one or more client devices 204A to 204E over the one or more corresponding Wi-Fi channels for the indicated time period.

The method 700 may comprise disabling communication between the wireless network device 600 and one or more further wireless network devices 200B, and/or the wireless network management device 100, over the one or more corresponding Wi-Fi channels. In this way, all communication over the one or more corresponding Wi-Fi channels may be disabled, thereby mitigating the potential for interference with the wireless backhaul network 206.

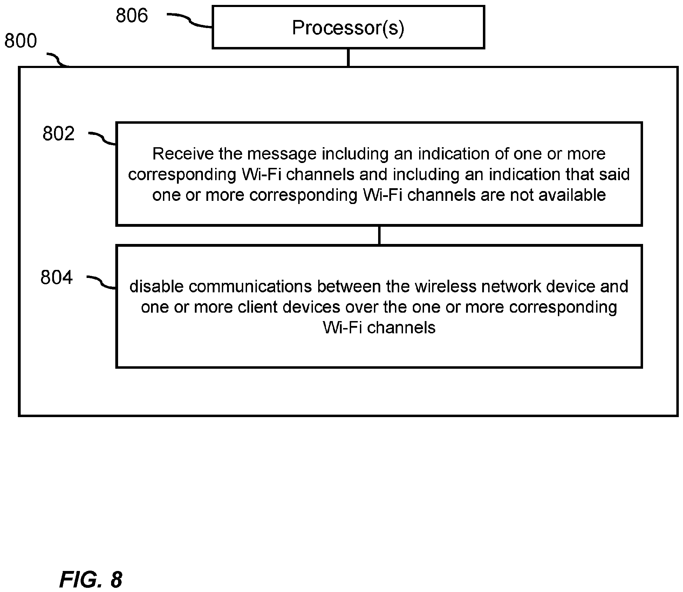

A non-transitory computer readable storage medium 800, shown in Figure 8, that includes instructions 802 and 804 for performing the method 700 for the network device 600 is also provided. The first computer-executable instruction 802, when executed by a processor 806, causes the processor 806 to receive 702 the message 408 including the indication of one or more corresponding Wi-Fi channels and including the indication that said one or more corresponding Wi-Fi channels are not available. The second computer-executable instruction 804, when executed by the processor 806, causes the processor 806 to disable communications between the wireless network device 600 and one or more client devices 204A to 204E over the one or more corresponding Wi-Fi channels.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

### Numbered Clauses

Various aspects of the present disclosure are set out according to the following numbered clauses.
1. A method for managing wireless networks, the method comprising:
   storing an indication of a first frequency band used for communications in a wireless backhaul network;
   deriving an indication of one or more corresponding Wi-Fi channels based on the stored indication of the first frequency band, the one or more corresponding Wi-Fi channels each being associated with a respective frequency band, wherein the respective frequency bands at least partially overlap with the first frequency band;
   generating a message including an indication of the one or more corresponding Wi-Fi channels and including an indication that said one or more corresponding Wi-Fi channels are not available for use; and
   transmitting the message to one or more wireless network devices that are managing a local Wi-Fi network.
2. The method of clause 1, wherein the indication of the first frequency band includes an indication of a base frequency and a channel width.
3. The method of clause 2, wherein the deriving the indication of the one or more corresponding Wi-Fi channels comprises:
   identifying a first set of one or more Wi-Fi channels corresponding to the base frequency; and
   determining one or more further sets of Wi-Fi channels that correspond to frequencies starting from the base frequency up to and including a frequency that is equal to the base frequency plus the channel width.
4. The method of any preceding clause, wherein deriving an indication of the one or more corresponding Wi-Fi channels includes accessing a database storing a plurality of records associating Wi-Fi channels to frequencies.
5. The method of any preceding clause, wherein the message includes an indication of a time period for which the said one or more corresponding Wi-Fi channels are not available for use.
6. The method of any preceding clause, wherein the indication that said one or more corresponding Wi-Fi channels are not available for use includes an indication that the said one or more corresponding Wi-Fi channels are occupied by the wireless backhaul network.
7. The method of any preceding clause, wherein deriving the indication of one or more corresponding Wi-Fi channels is performed in response to detecting a change in the stored indication of the first frequency band.
8. The method of any preceding clause, wherein the first frequency band includes two or more non-contiguous frequency bands.
9. The method of any preceding clause, wherein transmitting the message to one or more wireless network devices is performed in response to a detection that a wireless network device has been registered.
10. A wireless network management device comprising one or more processors, one or more communications modules, storage on which is stored storing computer-executable instructions which, when executed by the one or more processors cause the wireless network management device to:
   store an indication of a first frequency band used for communications in a wireless backhaul network;
   derive an indication of one or more corresponding Wi-Fi channels based on the stored indication of the first frequency band, the one or more corresponding Wi-Fi channels each being associated with a respective frequency band, wherein the respective frequency bands at least partially overlap with the first frequency band;
   generate a message including an indication of the one or more corresponding Wi-Fi channels and including an indication that said one or more corresponding Wi-Fi channels are not available for use; and
   transmit the message to one or more wireless network devices that are managing a local Wi-Fi network.
11. The wireless network management device of clause 10, wherein the computer-executable instructions, when executed by the one or more processors, cause the wireless network management device to:
   receive an indication of changes to frequency bands used in the wireless backhaul network; and
   update the stored indication of the first frequency band based on the received indication of changes to frequency bands.
12. The wireless network management device of clause 11, wherein deriving the indication of one or more corresponding Wi-Fi channels is performed in response to updating the stored indication of the first frequency band.
13. The wireless network management device of any of clauses 10 to 12, wherein deriving the indication of one or more corresponding Wi-Fi channels based on the stored indication of the first frequency band includes accessing a database to determine frequencies associated with one or more Wi-Fi channels.
14. A non-transitory computer-readable storage medium comprising computer-executable instructions which, when executed by at least one processor, cause the processor to:
   store an indication of a first frequency band used for communications in a wireless backhaul network;
   derive an indication of one or more corresponding Wi-Fi channels based on the stored indication of the first frequency band, the one or more corresponding Wi-Fi channels each being associated with a respective frequency band, wherein the respective frequency bands at least partially overlap with the first frequency band;
   generate a message including an indication of the one or more corresponding Wi-Fi channels and including an indication that said one or more corresponding Wi-Fi channels are not available for use; and
   transmit the message to one or more wireless network devices that are managing a local Wi-Fi network.
15. A method for a wireless network device used in a local Wi-Fi network, the method comprising:
   receiving the message including an indication of one or more corresponding Wi-Fi channels and including an indication that said one or more corresponding Wi-Fi channels are not available for use as generated according to the method of any one of clauses 1 to 9; and
   disabling communications between the wireless network device and one or more client devices over the one or more corresponding Wi-Fi channels.
16. The method according to clause 15, wherein the message includes an indication of a time period for which the one or more corresponding Wi-Fi channels are not available for use, and wherein the method includes disabling communications between the wireless network device and one or more client devices over the one or more corresponding Wi-Fi channels for the indicated time period.
17. The method according to clause 15 or clause 16, wherein the method comprises transmitting a message to one or more client devices indicating that the one or more corresponding Wi-Fi channels are not available for use.
18. The method according to any of clauses 15 to 17, wherein the method comprises transmitting a message to one or more further wireless network devices including an indication that the one or more corresponding Wi-Fi channels are not available for use.
19. The method according to any one of clauses 15 to 18, wherein the method comprises disabling communications between the wireless network device and one or more further wireless network devices over the one or more corresponding Wi-Fi channels.
20. A wireless network device comprising one or more processor, one or more communications modules, and storage on which is stored computer-executable instructions which, when executed by the one or more processors, cause the wireless network device to:
   receive the message including an indication of one or more corresponding Wi-Fi channels and including an indication that said one or more corresponding Wi-Fi channels are not available for use as generated according to the method of any one of clauses 1 to 9; and
   disable communications between the wireless network device and one or more client devices over the one or more corresponding Wi-Fi channels.
21. The wireless network device of clause 20, wherein the wireless network device is an access point.
22. A non-transitory computer-readable storage medium comprising computer-executable instructions which, when executed by one or more processor, cause the one or more process to:
   receive the message including an indication of one or more corresponding Wi-Fi channels and including an indication that said one or more corresponding Wi-Fi channels are not available for use as generated according to the method of any one of clauses 1 to 9; and
   disable communications between the wireless network device and one or more client devices over the one or more corresponding Wi-Fi channels.

## Claims

1. A method for managing wireless networks, the method comprising:
storing an indication of a first frequency band used for communications in a wireless backhaul network;
deriving an indication of one or more corresponding Wi-Fi channels based on the stored indication of the first frequency band, the one or more corresponding Wi-Fi channels each being associated with a respective frequency band, wherein the respective frequency bands at least partially overlap with the first frequency band;
generating a message including an indication of the one or more corresponding Wi-Fi channels and including an indication that said one or more corresponding Wi-Fi channels are not available for use; and
transmitting the message to one or more wireless network devices that are managing a local Wi-Fi network.

2. The method of claim 1, wherein the indication of the first frequency band includes an indication of a base frequency and a channel width, and
optionally, wherein the deriving the indication of the one or more corresponding Wi-Fi channels comprises:
identifying a first set of one or more Wi-Fi channels corresponding to the base frequency; and
determining one or more further sets of Wi-Fi channels that correspond to frequencies starting from the base frequency up to and including a frequency that is equal to the base frequency plus the channel width, and
optionally, accessing a database storing a plurality of records associating Wi-Fi channels to frequencies.

3. The method of any preceding claim, wherein the message includes any one or more of:
an indication of a time period for which the said one or more corresponding Wi-Fi channels are not available for use; and
an indication that the said one or more corresponding Wi-Fi channels are occupied by the wireless backhaul network.

4. The method of any preceding claim, wherein deriving the indication of one or more corresponding Wi-Fi channels is performed in response to detecting a change in the stored indication of the first frequency band.

5. The method of any preceding claim, wherein transmitting the message to one or more wireless network devices is performed in response to a detection that a wireless network device has been registered.

6. A wireless network management device comprising one or more processors, one or more communications modules, storage on which is stored storing computer-executable instructions which, when executed by the one or more processors cause the wireless network management device to:
store an indication of a first frequency band used for communications in a wireless backhaul network;
derive an indication of one or more corresponding Wi-Fi channels based on the stored indication of the first frequency band, the one or more corresponding Wi-Fi channels each being associated with a respective frequency band, wherein the respective frequency bands at least partially overlap with the first frequency band;
generate a message including an indication of the one or more corresponding Wi-Fi channels and including an indication that said one or more corresponding Wi-Fi channels are not available for use; and
transmit the message to one or more wireless network devices that are managing a local Wi-Fi network.

7. The wireless network management device of claim 6, wherein the computer-executable instructions, when executed by the one or more processors, cause the wireless network management device to:
receive an indication of changes to frequency bands used in the wireless backhaul network; and
update the stored indication of the first frequency band based on the received indication of changes to frequency bands.

8. The wireless network management device of claim 7, wherein deriving the indication of one or more corresponding Wi-Fi channels is performed in response to updating the stored indication of the first frequency band.

9. A non-transitory computer-readable storage medium comprising computer-executable instructions which, when executed by at least one processor, cause the processor to:
store an indication of a first frequency band used for communications in a wireless backhaul network;
derive an indication of one or more corresponding Wi-Fi channels based on the stored indication of the first frequency band, the one or more corresponding Wi-Fi channels each being associated with a respective frequency band, wherein the respective frequency bands at least partially overlap with the first frequency band;
generate a message including an indication of the one or more corresponding Wi-Fi channels and including an indication that said one or more corresponding Wi-Fi channels are not available for use; and
transmit the message to one or more wireless network devices that are managing a local Wi-Fi network.

10. A method for a wireless network device used in a local Wi-Fi network, the method comprising:
receiving the message including an indication of one or more corresponding Wi-Fi channels and including an indication that said one or more corresponding Wi-Fi channels are not available for use as generated according to the method of any one of claims 1 to 5; and
disabling communications between the wireless network device and one or more client devices over the one or more corresponding Wi-Fi channels.

11. The method according to claim 10, wherein the message includes an indication of a time period for which the one or more corresponding Wi-Fi channels are not available for use, and wherein the method includes disabling communications between the wireless network device and one or more client devices over the one or more corresponding Wi-Fi channels for the indicated time period.

12. The method according to claim 10 or claim 11, wherein the method comprises transmitting a message indicating that the one or more corresponding Wi-Fi channels are not available for use to:
one or more client devices; and/or
one or more further wireless network devices.

13. The method according to any one of claims 10 to 12, wherein the method comprises disabling communications between the wireless network device and one or more further wireless network devices over the one or more corresponding Wi-Fi channels.

14. A wireless network device comprising one or more processor, one or more communications modules, and storage on which is stored computer-executable instructions which, when executed by the one or more processors, cause the wireless network device to:
receive the message including an indication of one or more corresponding Wi-Fi channels and including an indication that said one or more corresponding Wi-Fi channels are not available for use as generated according to the method of any one of claims 1 to 5; and
disable communications between the wireless network device and one or more client devices over the one or more corresponding Wi-Fi channels.

15. A non-transitory computer-readable storage medium comprising computer-executable instructions which, when executed by one or more processor, cause the one or more process to:
receive the message including an indication of one or more corresponding Wi-Fi channels and including an indication that said one or more corresponding Wi-Fi channels are not available for use as generated according to the method of any one of claims 1 to 5; and
disable communications between the wireless network device and one or more client devices over the one or more corresponding Wi-Fi channels.
